# EUROPEAN PATENT APPLICATION

(11) **EP 2 814 242 A1**
(43) Date of publication of application: **17.12.2014**
(21) Application number: 14169058.6
(22) Date of filing: 20.05.2014
(51) Int. Cl.: H04N 5/765, H04N 21/422

(54) **Communication device, communication system, method of using communication device, and program**

(30) Priority: 12.06.2013 JP 2013123315
(71) Applicant: Ricoh Company, Ltd., Tokyo 143-8555 (JP)
(72) Inventor: Takahashi, Masato, Tokyo, 143-8555 (JP)
(74) Representative: Schwabe - Sandmair - Marx

(57) **Abstract**

A communication device (100) is used at a one hub to share information by transmitting and receiving image data and sound data among a plurality of hubs via a communication network. The communication device (100) includes: a transmitting unit (130) that converts at least one selected from a group consisting of image data and sound data from the one hub and image data and sound data transmitted from a different hub other than the one hub, into a digital signal that conforms to a predetermined standard so as to transmit the digital signal to a receiving device (150, 250) that supports the predetermined standard. The transmitting unit (130) transmits the digital signal to the receiving device (150, 250) when the receiving device (150, 250) is a dedicated receiving device (150) that is previously specified and that has an image recording/sound recording function or when the receiving device (150, 250) is a receiving device (250) that does not have an image recording/sound recording function.

## Description

### CROSS-REFERENCE TO RELATED APPLICATIONS

The present application claims priority to and incorporates by reference the entire contents of Japanese Patent Application No. 2013-123315 filed in Japan on June 12, 2013.

### BACKGROUND OF THE INVENTION

### 1. Field of the Invention

The present invention relates to a communication device, a communication system, a method of using the communication device, and a program and, more particularly, to a communication device that is used for sharing information by transmitting and receiving image data and sound data among a plurality of hubs via a communication network, a communication system that includes the communication device, a method of using the communication device, and the program that is used by the communication device.

### 2. Description of the Related Art

There is a well-known conventional transmitting/receiving device that includes a source device and a sink device, the source device converts image data and sound data into HDMI (registered trademark) signals (digital signals that conform to a HDMI (registered trademark) standard) and transmits the signals, and the sink device receives the HDMI (registered trademark) signals via an HDMI (registered trademark) cable (a cable that conforms to a HDMI (registered trademark) standard) (for example, see Japanese Patent No. 4182997).

However, with the transmitting/receiving device disclosed in Japanese Patent No. 4182997, if the image data and the sound data are copyrighted, there is a possibility that they are illegally copied.

### SUMMARY OF THE INVENTION

It is an object of the present invention to at least partially solve the problems in the conventional technology.

A communication device is used at a one hub to share information by transmitting and receiving image data and sound data among a plurality of hubs via a communication network. The communication device includes: a transmitting unit that converts at least one selected from a group consisting of image data and sound data from the one hub and image data and sound data transmitted from a different hub other than the one hub, into a digital signal that conforms to a predetermined standard so as to transmit the digital signal to a receiving device that supports the predetermined standard. The transmitting unit transmits the digital signal to the receiving device when the receiving device is a dedicated receiving device that is previously specified and that has an image recording/sound recording function or when the receiving device is a receiving device that does not have an image recording/sound recording function.

A method is to use a communication device. The communication device is used at a one hub to share information by transmitting and receiving image data and sound data among a plurality of hubs via a communication network. The method includes: determining whether a receiving device that is connected to the communication device and that supports a predetermined standard is any one of a dedicated receiving device that is previously specified and that has an image recording/sound recording function or a receiving device that does not have an image recording/sound recording function; and, when a determination result is positive at the determining, converting at least one selected form a group consisting of image data and sound data from the one hub and image data and sound data transmitted from a different hub other than the one hub, into a digital signal in accordance with the predetermined standard so as to transmit the digital signal from the communication device to the receiving device.

A computer program product includes a non-transitory computer-readable medium having computer readable program codes used in a communication device that is used at a one hub to share information by transmitting and receiving image data and sound data among a plurality of hubs via a communication network. The program codes when executed causing the communication device to execute: determining whether a receiving device that is connected to the communication device and that supports a predetermined standard is any one of a dedicated receiving device that is previously specified and that has an image recording/sound recording function or a receiving device that does not have an image recording/sound recording function; and, when a determination result is positive at the determining, converting, at least one selected form a group consisting of image data and sound data from the hub and image data and sound data transmitted from a different hub that is different from the hub, into a digital signal in accordance with the predetermined standard so as to transmit the digital signal to the receiving device.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram that illustrates a configuration of a conference system according to an embodiment;
FIGS. 2A and 2B are perspective views (1 and 2) of a teleconference device in a basic form;
FIG. 3 is a top view of the teleconference device in the basic form;
FIG. 4 is a block diagram that illustrates a configuration (1) for control of the teleconference device;
FIG. 5 is a side view (1) of the teleconference device in the basic form;
FIG. 6 is a side view (2) of the teleconference device in the basic form;
FIG. 7 is a bottom view of the teleconference device in the basic form;
FIG. 8 is a side view of the teleconference device in the open form;
FIG. 9 is a perspective view of the teleconference device in the maximum open form;
FIG. 10 is a diagram that illustrates the form of the teleconference that is held by using the teleconference device at each hub;
FIG. 11 is a diagram that illustrates schematic configurations of a source unit and a sink device that includes a recorder;
FIG. 12 is a flowchart that illustrates the control performed by the source unit;
FIG. 13 is a flowchart that illustrates the control performed by the sink device;
FIG. 14 is a diagram that illustrates a specific example of the details of EDID;
FIG. 15 is a diagram that illustrates schematic configurations of the source unit and a sink device that does not include a recorder; and
FIG. 16 is a block diagram that illustrates a configuration (2) for control of the teleconference device.

### DETAILED DESCRIPTION OF THE PREFERRED EMBODIMENTS

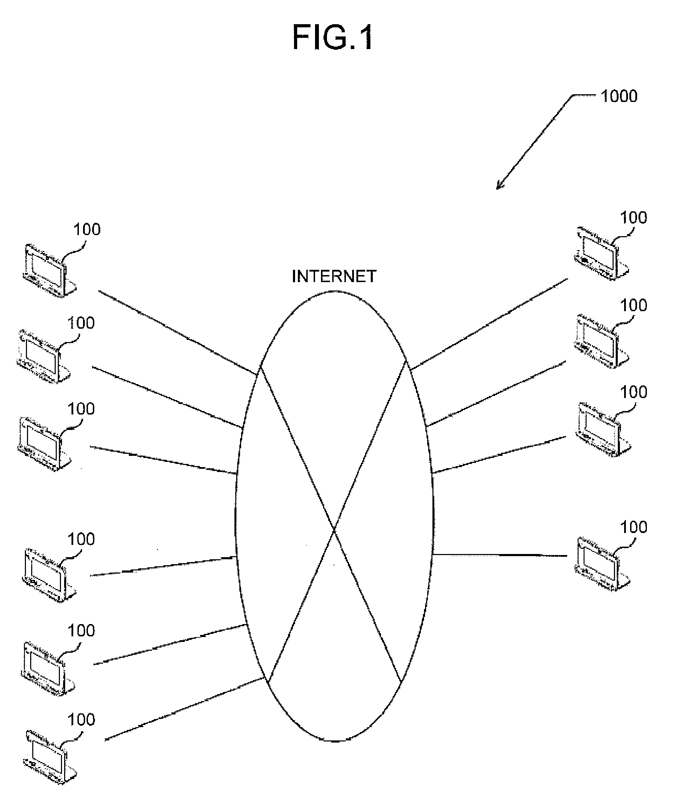

Exemplary embodiments of the present invention are explained in detail below with reference to FIGS. 1 to 15. FIG. 1 schematically illustrates a conference system 1000 according to an embodiment. The conference system 1000 is used for a teleconference (information sharing) via a network (communication network), e.g., the Internet, among at least three hubs (e.g., 10 hubs). Here, the teleconference is a system for sharing information by using moving images and sounds.

As illustrated in FIG. 1, the conference system 1000 includes, for example, a plurality of (e.g., 10) teleconference devices 100 that are communication devices.

For example, the 10 teleconference devices 100 have substantially the same configuration and function, and they are connected to one another such that they can perform a two-way communication via the Internet.

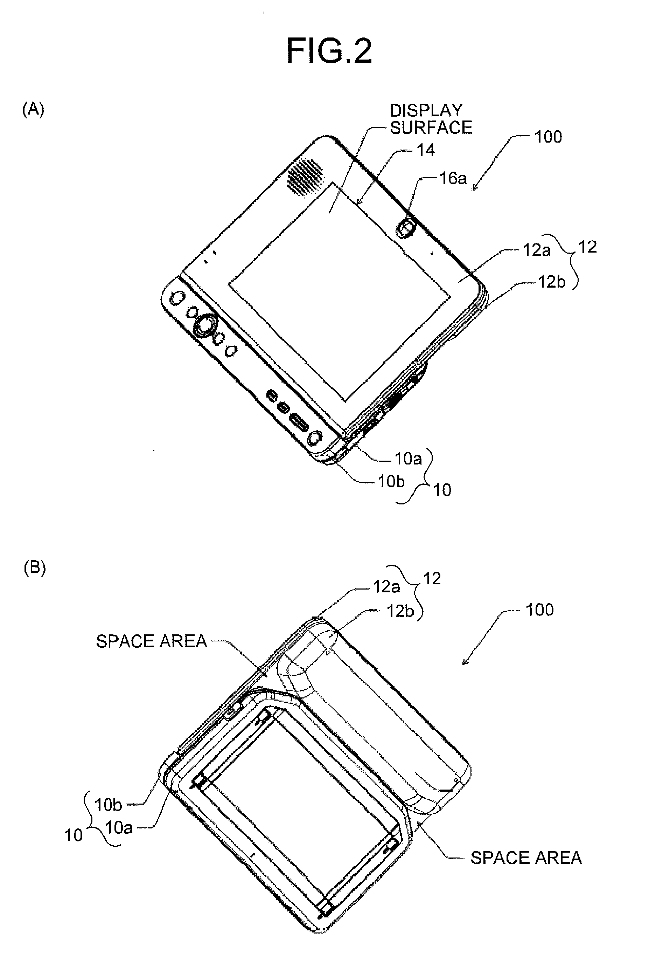

FIGS. 2A and 2B are perspective views that illustrate the external appearance of the teleconference device 100 in one form (hereafter, referred to as the basic form) when viewed from different directions.

As illustrated in FIGS. 2A and 2B, in the basic form, the teleconference device 100 has an overall shape (e.g., a thickness of 20 mm to 40 mm) like substantially a rectangular flat plate that has an A-4 size, for example.

As described above, the teleconference device 100 is designed to be thin and compact in the basic form. Furthermore, as described in detail below, the form of the teleconference device 100 can be changed between the basic form and an open form that is suitable to be used while it is placed on the top (placement surface) of, for example, a desk or table.

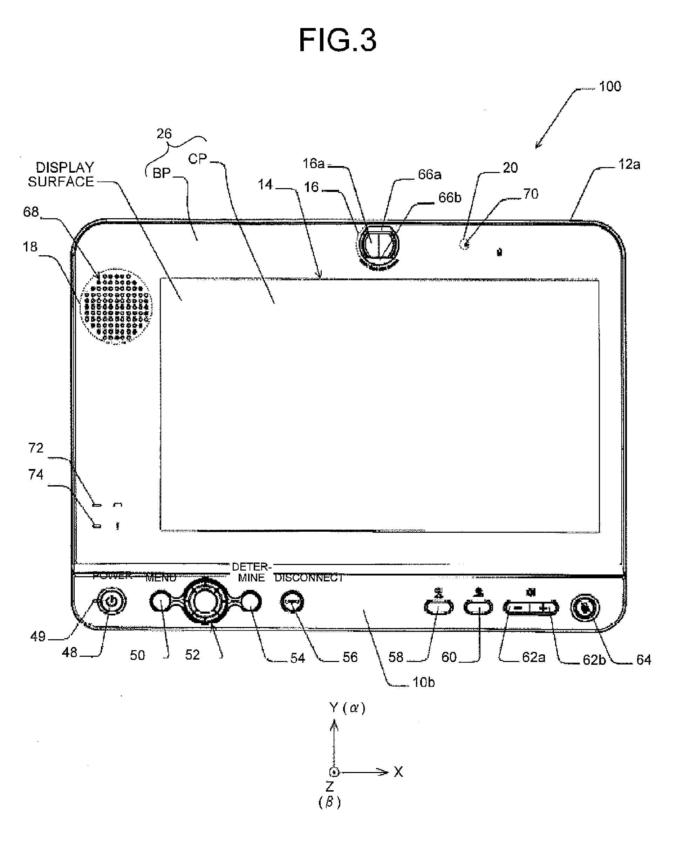

FIG. 3 illustrates a state where the teleconference device 100 in the basic form is placed on the horizontal placement surface. Hereafter, an explanation is given by using the longitudinal direction of the teleconference device 100 as an X-axis direction, the direction that is perpendicular to the X-axis direction on a horizontal plane as a Y-axis direction, and the direction (vertical direction) that is perpendicular to the X-axis direction and the Y-axis direction as a Z-axis direction. Furthermore, it is assumed that, if not otherwise specified, the teleconference device 100 is in the basic form.

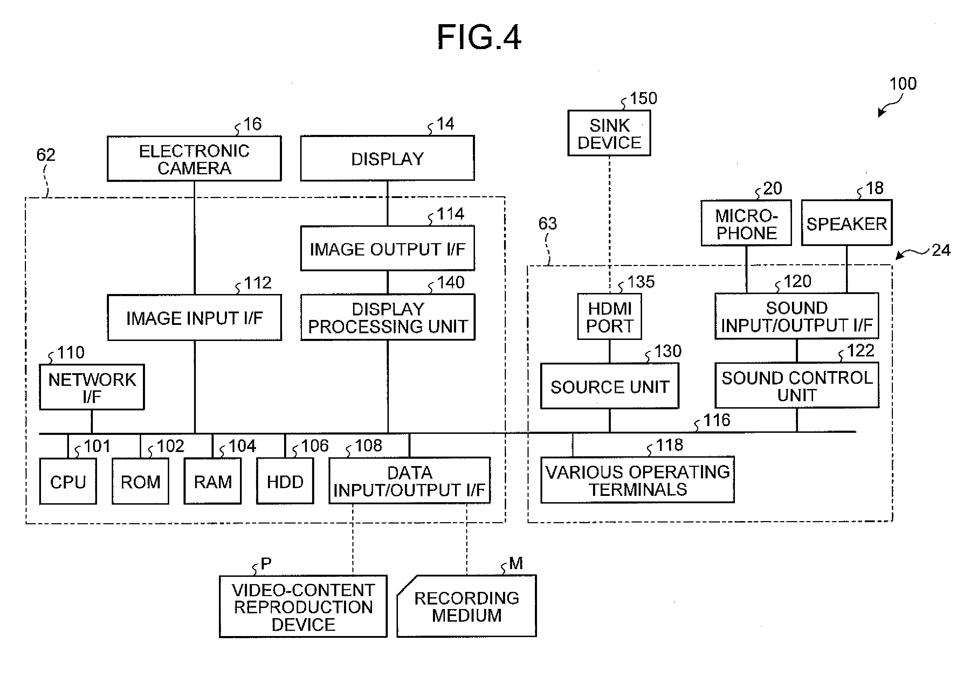

As illustrated in FIGS. 2A to 3, the teleconference device 100 includes a first chassis 10, a second chassis 12, a display 14, an electronic camera 16, a speaker 18, a microphone 20, a control device 24 (see FIG. 4), or the like.

As illustrated in FIGS. 2A and 2B, the first chassis 10 includes, for example, a control-device housing section 10a that houses the control device 24 and includes an operation panel section 10b on which a plurality of operating members are provided.

The control device 24 performs an encoding operation or decoding operation on image data and sound data and controls reception and transmission of images and sounds via the Internet.

As illustrated in FIG. 4, the control device 24 includes a main board 62 that is a board for control; a sub-board 63 that is a board for sound processing and operation; or the like.

For example, the main board 62 includes various components, such as a central processing unit (CPU) 101, a read only memory (ROM) 102, a random access memory (RAM) 104, a hard disk drive (HDD) 106 (or a storage or recording device), a data input/output interface (I/F) 108, a network I/F 110, an image input I/F 112, a display processing unit 140, and an image output I/F 114. The CPU 101, the ROM 102, the RAM 104, the HDD 106, the data input/output I/F 108, the network I/F 110, the image input I/F 112, and the display processing unit 140 are connected to one another via a bus line 116, such as an address bus or data bus, such that they can perform a two-way communication. Furthermore, the above-described image data is data on moving images or intermittent images (still images at a certain time interval).

The CPU 101 controls the overall operation of the teleconference device 100 on the basis of a predetermined program (teleconference-device program). An explanation is given below of a sequence of operations relating to a two-way communication of sounds and images via a network (e.g., the Internet) in response to a command from the CPU 101 in accordance with the teleconference-device program.

The ROM 102 stores a program, such as an initial program loader (IPL), that is used for driving the CPU 101. The RAM 104 is used as a work area of the CPU 101.

The HDD 106 stores the above-described teleconference-device program and various types of data, such as image data and sound data. Not only the HDD 106 but also a solid state drive (SSD), for example, may be used. The above-described teleconference-device program may be distributed by being stored in, for example, a recording medium readable by a computer in a format of a file that is installable or executable. Furthermore, the above-described teleconference-device program may be stored in the ROM 102 instead of the HDD 106. The HDD 106 controls reading or writing of various types of data from or into the HDD 106 under the control of the CPU 101.

The data input/output I/F 108 performs data input and output (reception and transmission) from and to a recording medium M, such as a flash memory, that is connected to a USB terminal, which will be explained later, or from and to a device (hereafter, also referred to as a video-content reproduction device P), such as a personal computer (PC), DVD player, or Blu-ray player, that is capable of reproducing video contents. Here, the "video contents" include, for example, moving images, such as movies, musicals, concerts, sport games, or landscapes, or still images, such as art works, buildings, or landscapes, that are distributed via a network or are stored in a recording medium. Furthermore, the "video contents" include copyrighted works (works that are protected by copyright protection) or include other than copyrighted works.

The recording medium M can be attached to or removed from the USB terminal, which will be explained later. Furthermore, if the recording medium M is, for example, an SD memory, CompactFlash (registered trademark), or the like, that cannot be directly attached to or removed from the USB terminal, a configuration may be such that a memory read drive is attached to or removed from the USB terminal, or a memory read drive may be separately provided in the teleconference device 100 in advance. Moreover, the recording medium M may be not only a flash memory but also an electrically erasable and programmable ROM (EEPROM), or the like, as long as it is a non-volatile memory that reads or writes data under the control of the CPU 101.

The network I/F 110 includes a LAN terminal 38 (e.g., Ethernet (registered trademark) terminal), which will be explained later, and it inputs and outputs data (image data and sound data) via the Internet. The network I/F 110 may be provided such that it is connectable to a wired LAN terminal, or it may be a wireless LAN network I/F that is connectable to a wireless LAN.

The image input I/F 112 receives, as predetermined image data, the image signal of an object that is output from the electronic camera 16, which will be explained later.

The display processing unit 140 performs, for example, an operation (split display operation) to display (split-display) multiples images (image data) together at different locations on the display surface of the display 14 when the images are separately transmitted via the network I/F 110 from the multiple teleconference devices 100 at the other hubs.

The image output I/F 114 converts the image data on which the split display operation has been performed by the display processing unit 140 into an image signal that can be displayed on the display 14 and outputs it to the display 14. As a result, the image corresponding to the image data is displayed on the display surface of the display 14. Furthermore, the above-described image signal includes an analog RGB signal (VGA), component video signal, High-Definition Multimedia Interface (HDMI) (registered trademark) signal, or Digital Video Interactive (DVI) signal.

The sub-board 63 includes various components, such as multiple operating terminals 118 that correspond to the above-described multiple operation buttons, a sound input/output I/F 120, a sound control unit 122, a source unit 130, and an HDMI (registered trademark) port 135. The operating terminals 118, the sound control unit 122, and the source unit 130 are connected via the bus line 116 such that they can perform a two-way communication with one another, and they are connected to each of the above-described components that are mounted on the main board 62 and are connected via the bus line 116 such that they can perform a two-way communication with one another.

The sound input/output I/F 120 receives, as predetermined sound data, the sound signal that is input from the microphone 20, and sends the sound data to the sound control unit 122, and it also converts the sound data that is received from a different hub via the network I/F 110 and the sound control unit 122 into a sound signal that can be reproduced by the speaker 18.

The sound control unit 122 adjusts the volume of sound that is output from the speaker 18 in response to an operation on a pair of volume buttons 62a, 62b, which will be described later, and switches input/non-input of sound from the microphone 20 when a microphone mute button 64, which will be explained later, is pressed (turned on/off).

Furthermore, the sound control unit 122 has an echo cancelation processing function that prevents echo and howling that occur when sound is output from the speaker 18 and is then input to the microphone 20 during a two-way communication with the teleconference devices 100 at the other hubs and a sound wave loop is formed among the teleconference devices 100 at the other hubs, and it has a noise cancelation processing function that reduces noise, such as operating noise of an indoor air conditioner, that is input through the microphone 20.

The source unit 130 is capable of converting at least one selected from a group consisting of the image data and the sound data that are transmitted from the video-content reproduction device P via the data input/output I/F 108, the image data and the sound data that are transmitted from a different hub via the network I/F 110, the image data that is input through the electronic camera 16 of the hub of interest, and the sound data that is input through the microphone 20 of the hub of interest, into a digital signal (hereafter, referred to as a High-Definition Multimedia Interface (HDMI) (registered trademark) signal) that conforms to the HDMI (registered trademark) standard and is capable of outputting it to the HDMI (registered trademark) port 135. According to the HDMI (registered trademark) standard, it is possible to perform a transaction of high-quality images and sounds between two devices only by connecting the two devices via a cable without installing a driver. A detailed explanation is given later of the source unit 130.

The HDMI (registered trademark) port 135 is an image output terminal that conforms to the HDMI (registered trademark) standard, and it outputs an HDMI (registered trademark) signal from the source unit 130 to a sink device 150 that is connected via an HDMI (registered trademark) cable (a cable that conforms to the HDMI (registered trademark) standard). In this case, the teleconference device 100 serves as a source device for the sink device 150. Thus, the teleconference device 100 and the sink device 150 constitute a communication system. Here, the "sink device" refers to a receiving device that supports the HDMI (registered trademark) standard, i.e., the device that is capable of receiving HDMI (registered trademark) signals and decoding them. A detailed explanation is given later of the sink device 150.

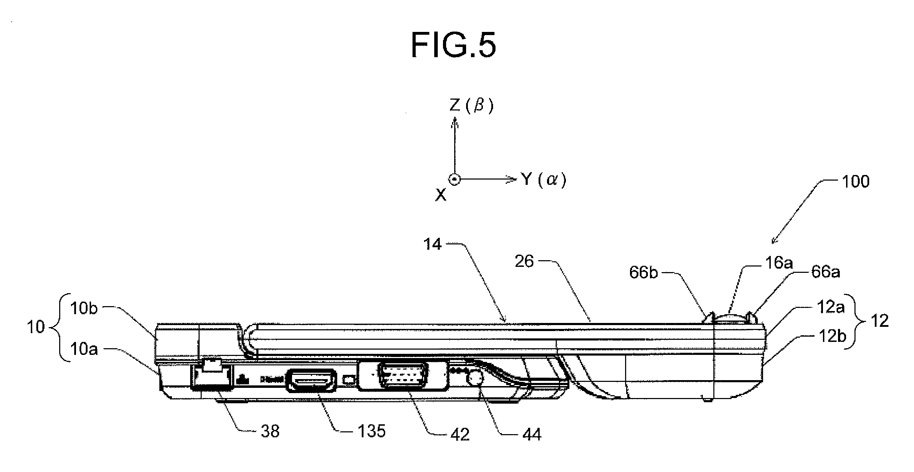

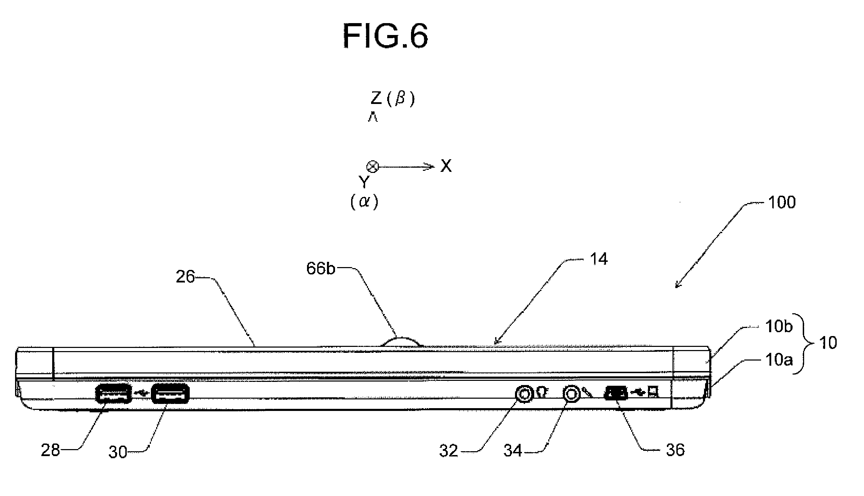

As it can be seen from the combination of FIG. 5 and FIG. 6, the control-device housing section 10a is formed of, for example, a box section that has a shape like substantially a rectangular flat plate where its longitudinal direction is in the X-axis direction.

Furthermore, as illustrated in FIG. 5, four openings are formed on the side wall of the control-device housing section 10a on the +X side, and the communication LAN terminal 38, a VGA image output terminal 42, and a power terminal (power jack) 44, which are mounted on the main board 62, are engaged with the four openings. In addition to or instead of the image output terminal 42, it is possible to provide a DVI-I terminal, component terminal, D terminal, S terminal, or composite terminal.

As illustrated in FIG. 6, for example, two openings are formed on the -X-side end section of the side wall of the control-device housing section 10a on the -Y side, and USB terminals 28, 30, which are mounted on the main board 62, are engaged with the two openings. Furthermore, for example, three openings are formed on the +X-side end section of the side wall of the control-device housing section 10a on the -Y side, and a headphone-connection terminal 32, a microphone-connection terminal 34, and a USB terminal 36, which are mounted on the main board 62, are engaged with the three openings.

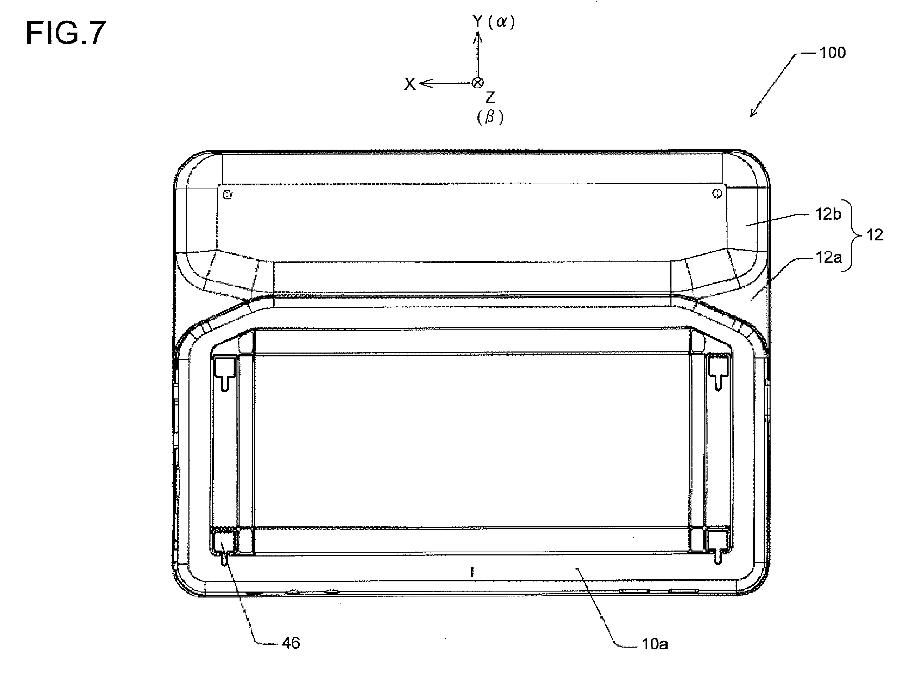

Moreover, as illustrated in FIG. 7, for example, four openings are formed on four corners of the wall (bottom wall) of the control-device housing section 10a on the -Z side, and four connectors 46 are engaged with the four openings, the four connectors being mounted on the main board 62 in order to connect an externally connected battery.

As it can be seen from the combination of FIGS. 3, 5, and 6, the operation panel section 10b is formed of a box section that has an elongated shape like substantially a rectangular flat plate where its longitudinal direction is in the X-axis direction, and it is connected to the +Z-side edge of the -Y-side end section of the control-device housing section 10a.

As illustrated in FIG. 3, for example, five openings are formed on the -X-side area of the wall of the operation panel section 10b on the +Z side and are provided side by side in the X-axis direction, and five operating members are individually engaged with the five openings. For example, the five operating members are, sequentially from the -X side to the +X side, a power button 48, a menu button 50, a cursor 52, a determination button 54, and a disconnection button 56 for disconnecting the Internet connection with a communication target.

The power button 48 is an operating member for turning on/off the power of the teleconference device 100. A power lamp 49 is provided in the vicinity of the power button 48 on the operation panel section 10b, and it lights when the power is on.

The menu button 50 is an operating member for invoking a menu screen on the display 14.

The cursor 52 is an operating member for selecting an item that is displayed within the menu screen that is presented on the display 14. Specifically, it is possible to select an item from the menu screen by operating the cursor 52.

The determination button 54 is an operating member for determining the item that is selected within the menu screen. Items that are selected and determined within the menu screen include, for example, the address of the teleconference device 100 at a different hub.

The disconnection button 56 is an operating member for disconnecting the Internet connection with the teleconference device 100 that is a communication target.

For example, five openings are formed on the +X-side area of the wall of the operation panel section 10b on the +Z side and are provided side by side in the X-axis direction, and five operating members are individually engaged with the five openings. For example, the five operating members are, sequentially from the -X side to the +X side, a view switch button 58, a brightness adjustment button 60, the pair of volume buttons 62a, 62b, and the microphone mute button 64.

The view switch button 58 is an operating member for switching the image to be transmitted to the other hubs among the images taken by the electronic camera 16. Specifically, for example, if there are multiple users (conference participants) at a certain hub, the view switch button 58 is pressed so that it is possible to transmit, to the other hubs, any of the images that selectively display at least one of the users.

The brightness adjustment button 60 is an operating member for adjusting the brightness of the image that is presented on the display 14. The brightness adjustment button 60 is appropriately pressed in accordance with the brightness around the teleconference device 100 so that the brightness of the screen of the display 14 can be adjusted to an appropriate brightness for desired visibility. Here, for example, the brightness that is adjusted by using the brightness adjustment button 60 is set in N (N is a natural number) stages and, each time the brightness adjustment button 60 is pressed, the brightness is increased or decreased in stages and, when the brightness adjustment button 60 is pressed N times, it is returned to the original brightness.

The pair of volume buttons 62a, 62b is the operating member for adjusting the volume of sound that is output from the speaker 18. Out of the pair of volume buttons 62a, 62b, the volume of sound can be decreased by pressing the volume button 62a on the -X side, and the volume of sound can be increased by pressing the volume button 62b on the +X side.

The microphone mute button 64 is the operating member for switching on/off the microphone 20. When the microphone 20 is on, it means a state where sounds are input via the microphone 20 and, when the microphone 20 is off, it means a state where sounds are not input via the microphone 20.

As illustrated in FIGS. 2A and 2B, the second chassis 12 includes a first housing section 12a and a second housing section 12b, the first housing section 12a houses the display 14, part of the electronic camera 16, part of the speaker 18, and part of the microphone 20, and the second housing section 12b houses the remaining part of the electronic camera 16 (except for an imaging lens 16a), the remaining part of the speaker 18, and the remaining part of the microphone 20.

As can be seen from the combination of FIGS. 3, 5, and 6, the first housing section 12a is formed of a box section that has a shape like substantially a rectangular flat plate where its longitudinal direction is the X-axis direction, and it is located on the +Z side of the control-device housing section 10a and on the +Y side of the operation panel section 10b. Here, for example, when the teleconference device 100 is in the basic form, the surface of the first housing section 12a on the -Z side is in contact with the surface of the control-device housing section 10a on the +Z side.

The display 14 is housed in substantially the middle of the first housing section 12a in a state where the display 14 is parallel to the XY plane.

For example, the display 14 includes a liquid crystal structure that includes a liquid crystal panel that has the display surface that displays images; two electrodes that are provided in positions with the liquid crystal panel interposed therebetween; and two polarization plates that are provided in positions with the two electrodes interposed therebetween and includes a backlight that is provided on one side of the liquid crystal structure, and it has an overall shape like a flat plate. That is, the display 14 is what is called a liquid crystal display.

For example, a large rectangular opening is formed on the surface of the first housing section 12a on the +Z side, the rectangular opening is larger than the display 14 more than slightly, and a cover panel 26 made of reinforced plastic is fitted into the rectangular opening. Specifically, the display 14 is covered with the cover panel 26 on the +Z side. The area of the cover panel 26 that corresponds to (is opposed to) the display 14 is transparent, and the area around the above area is, for example, black. In the following, the transparent area of the cover panel 26 is referred to as a clear panel section CP, and the black area of the cover panel 26 is referred to as a black panel section BP. In this case, the liquid crystal panel of the display 14 is viewable via the clear panel section CP from the +Z side.

As can be seen from the combination of FIG. 5, the second housing section 12b is formed of a box section that is like substantially a rectangular flat plate where its longitudinal direction is the X-axis direction, and it is connected to the -Z-side edge of the +Y-side end section of the first housing section 12a. Specifically, the second housing section 12b protrudes toward the -Z side from the -Z-side edge of the first housing section 12a.

As can be seen from the combination of FIGS. 3, 5, and 6, the part of the electronic camera 16 except for the imaging lens 16a is housed in the middle section, with respect to the X-axis direction, of the space that is formed by the end section of the first housing section 12a on the +Y side and the second housing section 12b, and the imaging lens 16a protrudes outward from the second chassis 12 through the opening that is formed on the black panel section BP.

For example, a wide-angle lens that has substantially a semispherical shape and that has a field of view of 170° in the X-axis direction and a field of view of 135° in the Y-axis direction is used as the imaging lens 16a.

As illustrated in FIGS. 3, 5, and 6, a pair of lens-protection protrusions 66a, 66b are formed and protruded near the +Y side and the -Y side of the imaging lens 16a on the black panel section BP in order to protect the imaging lens 16a. The outer surface of each of the lens-protection protrusions is formed of a curved surface; therefore, even if fingers, or the like, are brought into contact with it, physical damage is prevented.

The electronic camera 16 receives an image of an object (e.g., a user, writings and paintings, or the like) via the imaging lens 16a, converts the received image into an image signal (electric signal), and outputs it to the image input I/F 112 (see FIG. 4). For example, a CCD, CMOS, or the like, is used as an imaging element of the electronic camera 16.

Furthermore, as illustrated in FIG. 3, the speaker 18 is provided on the -X-side end section of the space that is formed by the +Y-side end section of the first housing section 12a and the second housing section 12b, and the sound output direction is substantially in the +Z direction.

Here, for example, a full-range type round speaker is used as the speaker 18; however, other speakers may be used. The speaker 18 is connected to the sound input/output I/F 120, and it outputs, as sound, the sound signal that is sent from the sound input/output I/F 120 (see FIG. 4).

A sound emission opening 68 is formed on the area that is included in the black panel section BP and that corresponds to the speaker 18 in order to emit to outside the sound that is output from the speaker 18, and the sound emission opening 68 includes a plurality of small through-holes (see FIG. 3).

Furthermore, the microphone 20 is provided on the +X-side area of the electronic camera 16 in the space that is formed by the +Y-side end section of the first housing section 12a and the second housing section 12b, and the sound input direction is substantially in the -Z direction.

Here, for example, a small non-directional microphone is used as the microphone 20; however, a directional microphone may be used. The microphone 20 is connected to the sound input/output I/F 120, and it sends an input sound as a sound signal to the sound input/output I/F 120 (see FIG. 4).

A sound capturing opening 70 is formed on the area that is included in the black panel section BP and that corresponds to the microphone 20 in order to capture the sound that is input through the microphone 20, and the sound capturing opening 70 includes at least one small through-hole.

Furthermore, a remaining-amount lamp 72 and a connection lamp 74 are provided on the corner section of the black panel section BP on the -X side and the -Y side, the remaining-amount lamp 72 indicates the remaining amount of change in the externally connected battery, and the connection lamp 74 indicates the connection status of the Internet connection.

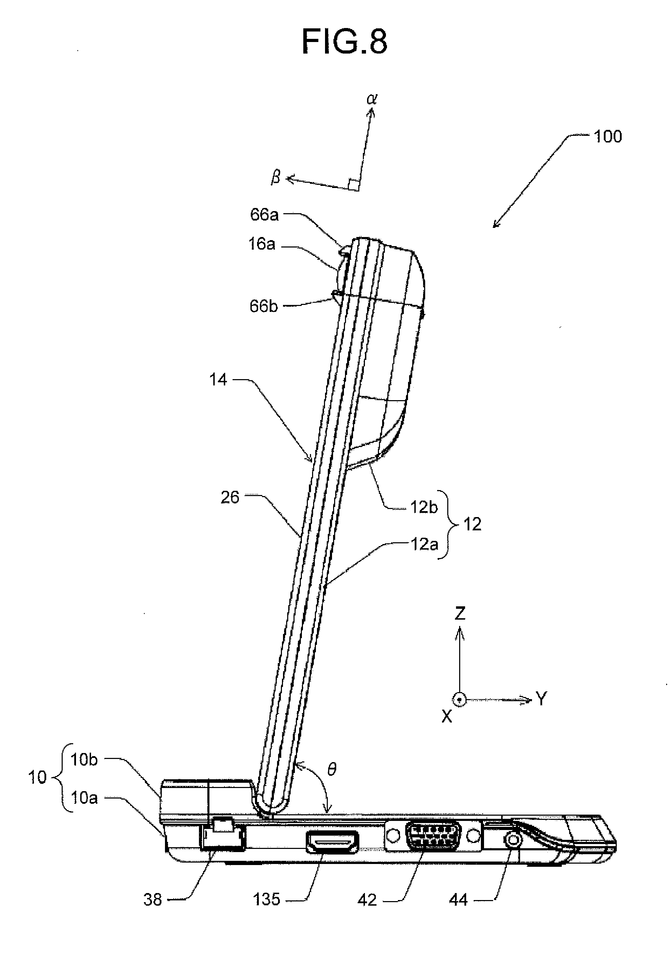

In the following, as illustrated in FIG. 8, an explanation is given by using the axis that is perpendicular to the X axis and is parallel to the cover panel 26 as the α axis and by using the axis that is perpendicular to the X axis and the α axis as the β axis. When the teleconference device 100 is in the basic form, the α axis corresponds to the Y axis, and the β axis corresponds to the Z axis.

Here, the end section of the first housing section 12a on the -Y side, i.e., the end section thereof on the -α side is connected to the first chassis 10 via a torque hinge (not illustrated) whose axial direction is in the X-axis direction. Furthermore, the liquid crystal panel of the display 14 is visible from the +β side, the imaging lens 16a is exposed to the +β side, the sound output direction of the speaker 18 is substantially on the +β side, and the sound input direction of the microphone is substantially on the -β side.

Specifically, due to the action of the above-described torque hinge, the second chassis 12 is relatively rotatable around the X axis between the contact position (see FIGS. 5 and 6) where it is in contact with the first chassis 10 and the separation position (see FIG. 8) where it is separated from the first chassis 10. Therefore, in the following, the form of the teleconference device 100 when the second chassis 12 is in the separation position is also referred to as the open form.

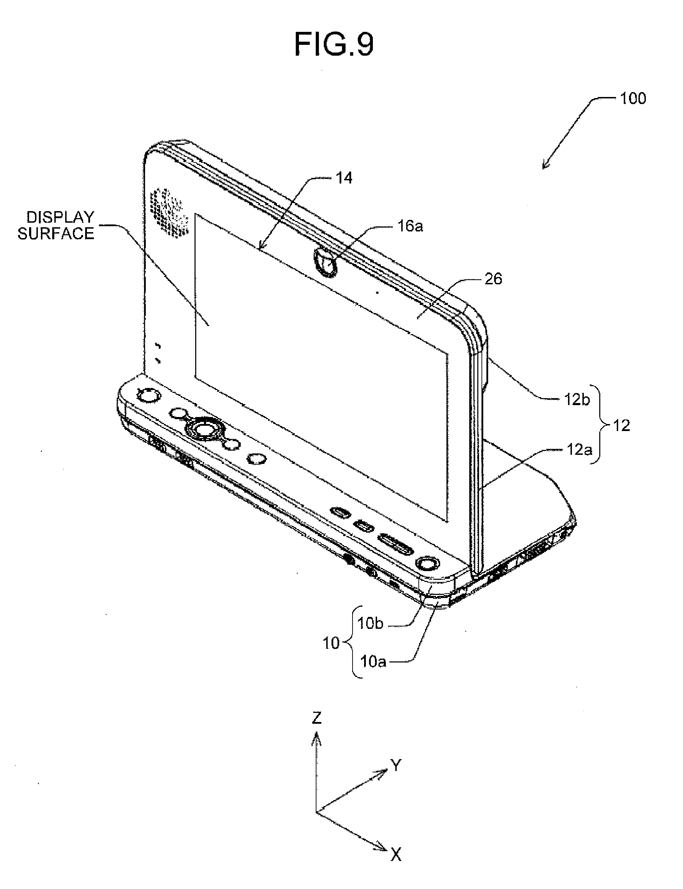

The rotation angle θ of the second chassis 12 relative to the first chassis 10 around the X axis is set to, for example, 0°≤6≤90° if θ=0° when the teleconference device 100 is in the basic form, i.e., when the second chassis 12 is in the contact position. In FIG. 9, θ=90°, and the teleconference device 100 is in the maximum open form. Furthermore, due to the action of the above-described torque hinge, the second chassis 12 can be held at the position with the rotation angle θ relative to the first chassis 10 around the X axis. When the second chassis 12 is in the contact position, the form of the teleconference device 100 is the basic form. Therefore, in the following, the basic form is also referred to as the closed form.

An explanation is given below of an example of the teleconference that uses the conference system 1000 that has the above-described configuration. Here, the teleconference is held among, for example, 10 hubs by using the teleconference device 100 that is provided at each of the hubs (see FIG. 1). The number of users (conference participants) at each of the hubs is one, for example.

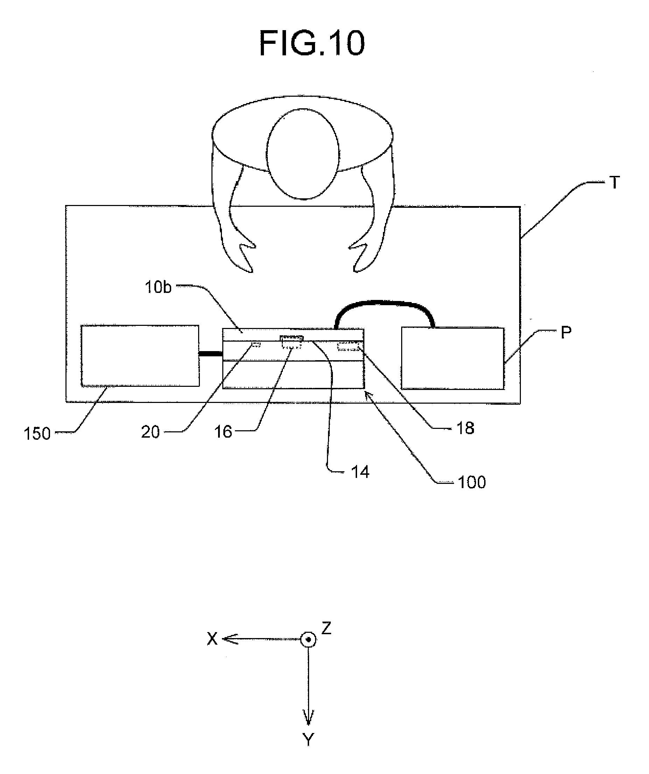

As illustrated in FIG. 10, the user at each of the hubs takes a seat on the -Y side of a table T that is provided in a room, for example, in a state where he/she faces the side of the table T.

The user places the teleconference device 100, for example, in the basic form on the top of the table T such that the operation panel section 10b is located on the front side (-Y side), and rotates the second chassis 12 relative to the first chassis 10 around the X axis at the angle φ (e.g., 60°≤φ≤90°). Accordingly, the display 14 is set in a state where it rises from the first chassis 10 as a base and faces substantially the -Y side, i.e., a state where the display surface is viewable from the -Y side. Furthermore, in this state, the imaging lens 16a, the speaker 18, and the microphone 20 are located on substantially the same level as that of the face of the user who is taking a seat. Moreover, in this state, the imaging lens 16a faces substantially the -Y side, the sound output direction of the speaker 18 is on substantially the -Y side, and the sound input direction of the microphone is on substantially the +Y side.

Furthermore, the user places the video-content reproduction device P and the sink device 150 on the table T, for example, at the positions with the teleconference device 100 interposed therebetween in the X-axis direction.

The user then establishes wiring connections (e.g., a connection between the LAN terminal 38 and the terminal to be connected to the Internet, connection between the video-content reproduction device P and the teleconference device 100, connection between the teleconference device 100 and the sink device 150, connection between the power terminal 44 and an external power, or the like) related to electricity and communication for the teleconference device 100. A communication connection between the teleconference device 100 and the sink device 150 will be explained later.

The user then presses the power button 48 so as to start up the teleconference device 100. At this time, the display 14 presents the menu screen. The menu screen displays various items for various adjustments, the start of a conference (the start of a two-way communication), or the like, by using icons and textual information. The user then operates the cursor 52 to select the item related to the start of a conference on the above-described menu screen and presses the determination button 54 to determine the start of a conference.

When the start of a conference is determined, the menu screen on the display 14 of the teleconference device 100 at a one hub presents the address list of the other 9 hubs, and the user at the hub operates the cursor 52 so as to select, from the above-described address list, the other hubs with which it desires to perform a teleconference (two-way communication) and determine it by pressing the determination button 54. Here, the other 9 hubs are selected and determined. Accordingly, the teleconference device 100 at the one hub transmits a request for a two-way communication to the teleconference devices 100 at the other 9 hubs.

When the teleconference device 100 at each of the other hubs receives a request for a two-way communication, the teleconference device 100 displays the items related to acceptation and rejection of the request on the menu screen that is presented on the display 14.

Then, the user at each of the other hubs operates the cursor 52 and the determination button 54 of the teleconference device 100 at the hub so as to select and determine any of the above-described items related to acceptation and rejection. Here, the item related to acceptation is selected and determined and, as a result, the 10 teleconference devices 100 are connected such that they can perform a two-way communication with one another via the Internet.

When a two-way communication is started among the 10 teleconference devices 100, the image of the user at a one hub that is taken by the electronic camera 16 of the teleconference device 100 at the one hub is transmitted to the teleconference devices 100 at the other 9 hubs via the Internet and is presented on the displays 14 of the teleconference devices 100. Furthermore, the image taken by the electronic camera 16 of the teleconference device 100 at a one hub can be presented on the display 14 of the teleconference device 100 at the one hub.

Furthermore, the voice of the user at a one hub that is captured by the microphone 20 of the teleconference device 100 at the one hub is transmitted to the teleconference devices 100 at the other 9 hubs via the Internet and is output from the speakers 18 of the teleconference devices 100.

Furthermore, the image output from the video-content reproduction device P at a one hub is transmitted, via the teleconference device 100 at the one hub and via the Internet, to the teleconference devices 100 at the other 9 hubs and is presented on the displays 14 of the teleconference devices 100. Moreover, the image output from the video-content reproduction device P at a one hub can be presented on the display 14 of the teleconference device 100 at the one hub. As a result, images of the video contents can be shared among the 10 hubs.

Furthermore, the sound output from the video-content reproduction device P at a one hub is transmitted, via the teleconference device 100 at the one hub and via the Internet, to the teleconference devices 100 at the other 9 hubs and is output from the speakers 18 of the teleconference devices 100. Moreover, the sound output from the video-content reproduction device P at a one hub can be output from the speaker 18 of the teleconference device 100 at the one hub. As a result, sounds of the video contents can be shared among the 10 hubs.

As described above, a teleconference is held among the 10 hubs through a two-way communication of images and sounds.

Here, at a one hub, the source unit 130 transmits, to the sink device 150, the sound data from the one hub, the image data and the sound data from the other 9 hubs, and the image data and the sound data from the video-content reproduction device P so that the sink device 150 can store the data as described below. That is, it is possible to make an image recording/sound recording (recording) of the details of a conference including video contents. As the details of a conference are recorded, for example, a person who has not attended the teleconference can view the details of the conference as appropriate.

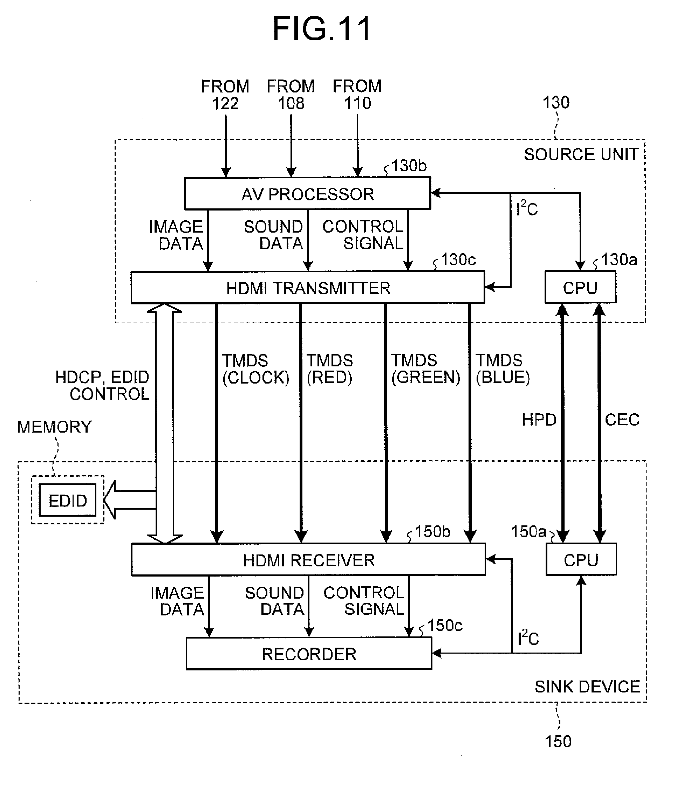

A detailed explanation is given below, with reference to FIG. 11, of the source unit 130 and the sink device 150. Here, it is assumed that the HDMI (registered trademark) port 135 of the teleconference device 100 is connected to the sink device 150 via an HDMI (registered trademark) cable.

As illustrated in FIG. 11, the source unit 130 includes, for example, a CPU 130a, an AV processor 130b, and an HDMI (registered trademark) transmitter 130c. The CPU 130a, the AV processor 130b, and the HDMI (registered trademark) transmitter 130c are connected to one another via a serial bus (e.g., I²C).

In accordance with an instruction from the CPU 130a, the AV processor 130b receives the sound data that is input from the microphone 20 and is passed through the sound control unit 122, the image data and the sound data that are transmitted from the other hubs and are passed through the network I/F 110, and the image data and the sound data that are output from the video-content reproduction device P and are passed through the data input/output I/F 108 and, in accordance with an instruction from the CPU 130a, the AV processor 130b outputs the received image data and sound data and a control signal (e.g., a signal for synchronization between the image data and the sound data) to the HDMI (registered trademark) transmitter 130c.

When the AV processor 130b receives at least two sets out of the sound data from the other hubs, the sound data from the microphone 20, and the sound data from the video-content reproduction device P, the AV processor 130b performs mixing on at least the two sets of the sound data and outputs it to the HDMI (registered trademark) transmitter 130c.

The HDMI (registered trademark) transmitter 130c receives the image data, the sound data, and the control signal from the AV processor 130b, generates three Transition Minimized Differential Signaling (TMDS) signals that correspond to light's three primary colors (red, green, and blue) and a TMDS clock on the basis of the received image data, sound data, and control signal, and outputs them to the sink device 150 via the HDMI (registered trademark) port 135 and the HDMI (registered trademark) cable.

The sink device 150 is a dedicated receiving device that is previously specified, and it includes, for example, a CPU 150a, an HDMI (registered trademark) receiver 150b, a recorder (recording device) 150c, or the like. The CPU 150a, the HDMI (registered trademark) receiver 150b, and the recorder 150c are connected to one another via a serial bus (e.g., I²C).

In accordance with an instruction from the CPU 150a, the HDMI (registered trademark) receiver 150b receives each of the TMDS signals and the TMDS clock from the HDMI (registered trademark) transmitter 130c, generates (restores) image data, sound data, and a control signal on the basis of the received TMDS signals and TMDS clock, and outputs them to the recorder 150c.

The recorder 150c includes, for example, a solid state drive (SSD) that uses a flash memory or a hard disk drive (HDD) as a recording medium that stores image data and sound data received from the HDMI (registered trademark) receiver 150b. In this case, it is possible to appropriately read the details of a conference that is stored in the recording medium so as to view them. Furthermore, the recorder 150c may include, for example, a thin disk (e.g., a disk with a DVD-R format, DVD-RW format, or the like) as a recording medium that stores the details of a conference. In this case, a thin disk that stores the details of a conference is reproduced by the video-content reproduction device, whereby the details of the conference can be viewed.

Furthermore, a Hot Plug Detect (HPD) signal and a Consumer Electronics Channel (CEC) signal are communicated between the CPU 130a of the source unit 130 and the CPU 150a of the sink device 150. The HPD signal is a signal for making the source unit 130 and the sink device 150 recognize that the source unit 130 and the sink device 150 are connected to each other via the HDMI (registered trademark) cable.

Moreover, a Consumer Electronics Channel (CEC) signal is communicated between the CPU 130a of the source unit 130 and the CPU 150a of the sink device 150. The CEC will be explained later.

Furthermore, a control on a High-bandwidth Digital Content Protection (HDCP) system is performed between the HDMI (registered trademark) transmitter 130c and the HDMI (registered trademark) receiver 150b. For example, when the video contents, such as movies, that are protected by copyright protection are digitally transmitted from the source unit 130 to the sink device, they are encrypted by using the HDCP, whereby it is possible to prevent unauthorized copying that uses devices (devices other than the sink device) that are capable of making an image recording/sound recording. Here, both the source unit 130 and the sink device 150 supports the HDCP, and they can be connected to each other. Generally, if a source device supports the HDCP and if a sink device does not support the HDCP, it is difficult to connect them. Conversely, if a source device does not support the HDCP, and even if a sink device supports or does not support the HDCP, they can be connected to each other; however, as protection (encryption) by the HDCP is not performed, there is a possibility that unauthorized copying is performed by using devices (devices other than the sink device) that are capable of making an image recording/sound recording.

Furthermore, a control on Extended Display Identification Data (EDID) is performed between the HDMI (registered trademark) transmitter 130c and the HDMI (registered trademark) receiver 150b. The EDID is stored in a memory (e.g., ROM) that is included in the sink device 150. Furthermore, the EDID is also stored in a memory of the video-content reproduction device P. The EDID will be explained later.

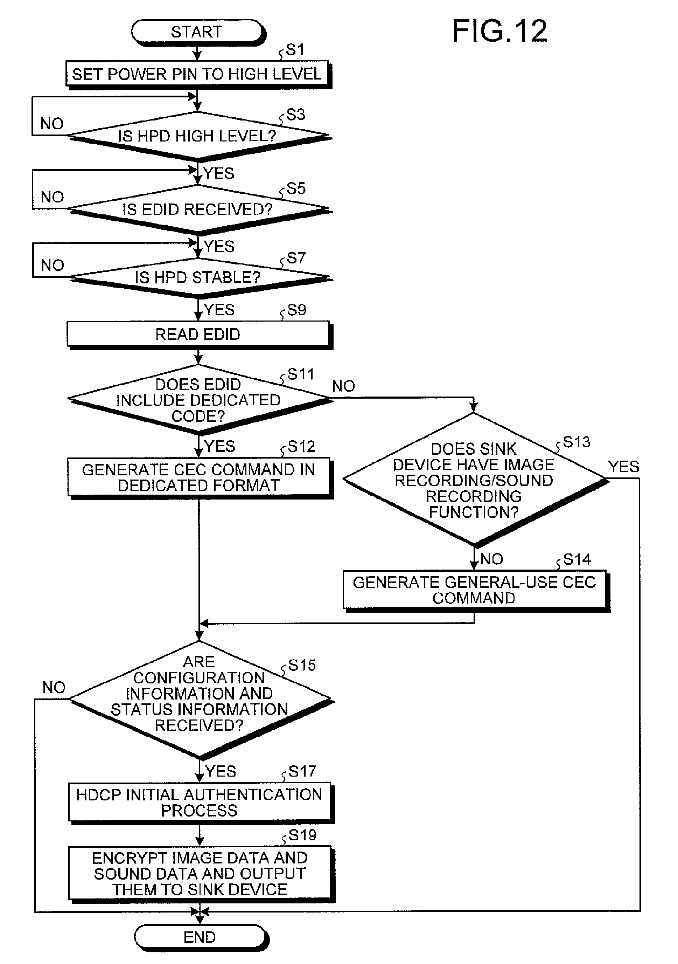

An explanation is given below, with reference to FIG. 12, of an example of the control performed by the source unit 130. The flowchart of FIG. 12 corresponds to the processing algorithm of the CPU 130a. It is assumed that the power of the teleconference device 100 is on. Furthermore, it is assumed that the video-content reproduction device P and the teleconference device 100 are connected to each other via a USB cable (a cable that conforms to the USB standard). Moreover, it is assumed that the HDMI (registered trademark) port 135 of the teleconference device 100 and the sink device are connected to each other via an HDMI (registered trademark) cable.

Specifically, the video-content reproduction device P, the teleconference device 100, and the sink device are connectable via a bus through a CEC line of 1 bit physically with the teleconference device 100 at the top. When connected via a bus through a CEC line, the video-content reproduction device P, the teleconference device 100, and the sink device can be controlled in conjunction by using a single remote controller.

The teleconference device 100 generates a CEC command so as to acquire the physical address, logical address, configuration information, status information, the device type, or the like, of each of the video-content reproduction device P and the sink device. The configuration information refers to information, such as characteristic parameters for reproducing images and sounds. The status information refers to, for example, the presence or absence of a disk in the video-content reproduction device P, or the capacity of an HDD of a recorder in the sink device.

A unique physical address is assigned to the EDID of each of the video-content reproduction device P and the sink device, and the teleconference device 100 uses the physical address to access the EDID of the device. Furthermore, as for the CEC, a unique logical address is defined for each of the devices in addition to the physical address. The teleconference device 100 uses the logical address to determine the type of each of the connected devices, i.e., determine whether each of the connected devices is any one of, for example, a player (a video-content reproduction device), recorder (image recording/sound recording device), monitor (display device), and AV amplifier (amplifier). Specific examples of the physical address and the logical address are disclosed in Japanese Patent No. 4822972 (paragraphs No. 0034 to 0038).

At the first Step S1, the power pin (+5 V power pin) of the HDMI (registered trademark) cable that connects the HDMI (registered trademark) port 135 and the sink device is set to a high level.

At the next Step S3, it is determined whether the HPD is a high level. That is, it is determined whether a hot plug is detected. If "a hot plug is detected", it means that it is detected that the sink device 150 is connected to the source unit 130 via the HDMI (registered trademark) cable. When a positive determination is made at Step S3, the process proceeds to Step S5. Conversely, when a negative determination is made at Step S3, the same determination is repeated.

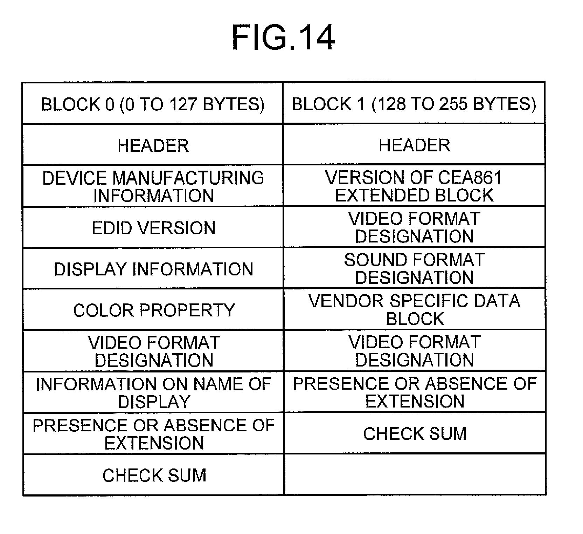

At Step S5, it is determined whether the EDID of the sink device is received. Here, as illustrated in FIG. 14, for example, the EDID includes the video format, sound format, manufacturing information, or the like, on the sink device. Here, as illustrated in FIG. 14, the device manufacturing information that is stored in the block 0 of the EDID of the sink device additionally includes, for example, a dedicated code of the manufacturer of the teleconference device 100 and the sink device 150, i.e., unique information that indicates that the sink device 150 is a dedicated receiving device and is previously specified so as to be used together with the teleconference device 100. When a positive determination is made at Step S5, the process proceeds to Step S7. When a negative determination is made at Step S5, the same determination is repeated.

At Step S7, it is determined whether the HPD is stable. When a positive determination is made at Step S7, the process proceeds to Step S9. Conversely, when a negative determination is made at Step S7, the same determination is repeated.

At Step S9, the EDID of the sink device is read.

At the next Step S11, it is determined whether the EDID of the sink device includes the above-described dedicated code. When a positive determination is made at Step S11, the process proceeds to Step S12. Conversely, when a negative determination is made at Step S11, the process proceeds to Step S13.

At Step S12, a CEC command in a dedicated format is generated. If the sink device is a dedicated receiving device (the sink device 150), the sink device 150 receives the CEC command and transmits, to the source unit 130, the configuration information and the status information of the sink device 150. Here, "a CEC command in a dedicated format" refers to a CEC command that can be recognized exclusively by a dedicated receiving device.

At Step S 13, it is determined whether the sink device has an image recording/sound recording function. This determination is made on the basis of the logical address of the sink device that is defined by the CEC. When a negative determination is made at Step S13, the process proceeds to Step S14. Conversely, when a positive determination is made at Step S13, the flow is terminated. That is, if the EDID of the sink device does not include a dedicated code, and if the sink device has an image recording/sound recording function, the subsequent process is not performed.

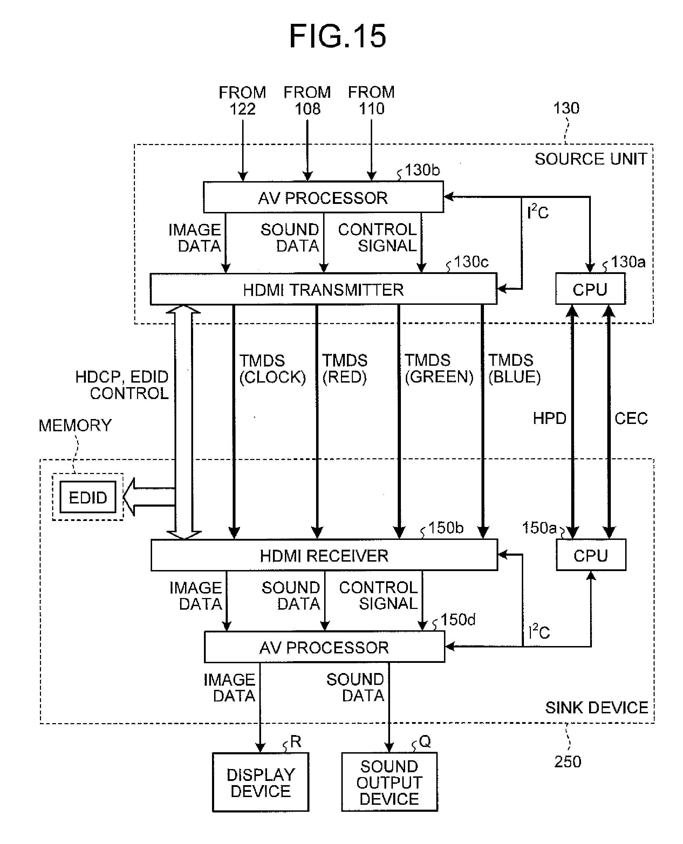

Here, FIG. 15 illustrates, for example, a sink device 250 that is used for monitoring and that does not have an image recording/sound recording function. The recorder 150c of the sink device 150 is replaced with an AV processor 150d in the sink device 250. In the sink device 250, the AV processor 150d converts the image data received from the HDMI (registered trademark) receiver 150b into an image signal so as to output it to a display device R, such as a monitor or projector. In this case, it is possible to collectively display (spit-display) at least two of the image from the video-content reproduction device P, the image from a different hub, and the image from the hub of interest (the image that is input through the electronic camera 16 of the hub of interest) at different locations of, for example, a viewing surface of a monitor, screen, or the like. If the image from the video-content reproduction device P is displayed, the image can be shared with the other hubs. Furthermore, the AV processor 150d is capable of converting the sound data received from the HDMI (registered trademark) receiver 150b into a sound signal and outputting it to, for example, a sound output device Q that includes a speaker. However, in this case, as an image recording/sound recording (recording) is not performed on the details of a conference, the sound data from the hub of interest does not need to be transmitted to the sink device.

At Step S 14, a general-use CEC command is generated.

At Step S 15, it is determined whether the configuration information and the status information of the sink device are received. When a positive determination is made at Step S15, the process proceeds to Step S17. Specifically, if the sink device is a dedicated receiving device (the sink device 150), it transmits the configuration information and the status information of the sink device to the source unit 130 when the sink device receives a CEC command in a dedicated format; therefore, a positive determination is accordingly made at Step S15. Furthermore, if the sink device is a receiving device that does not have an image recording/sound recording function, it transmits the configuration information and the status information of the sink device to the source unit 130 when the sink device receives a general-use CEC command; therefore, a positive determination is accordingly made at Step S 15. Conversely, when a negative determination is made at Step S15, the flow is terminated.

At Step S17, an HDCP initial authentication process is performed. Here, the source unit 130 is a master, and it performs an HDCP authentication on the sink device. The authentication operation is performed at a certain time interval.

At the next Step S 19, the image data and the sound data are encrypted and output to the sink device. After Step S19 is executed, the flow is terminated.

As can be understood from the above explanation, if the sink device is a dedicated receiving device (the sink device 150) or if it is a receiving device that does not have an image recording/sound recording function, the source unit 130 encrypts the image data and the sound data and outputs them to the sink device.

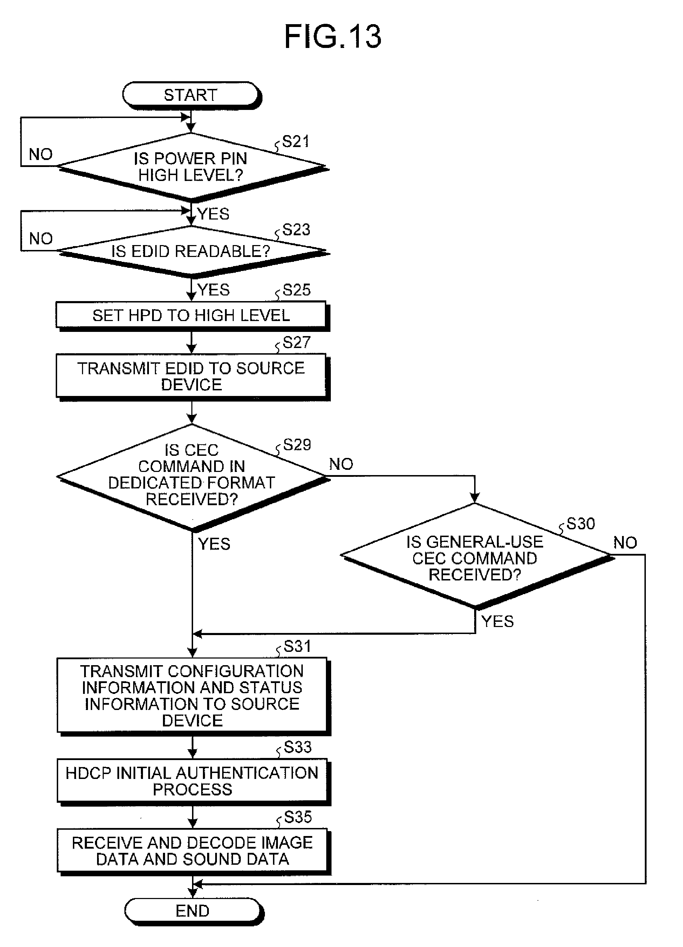

Next, an explanation is given, with reference to FIG. 13, of an example of the control performed by the sink device. The flowchart of FIG. 13 corresponds to a processing algorithm of the CPU 150a. The operation and determination under the control executed by the sink device and the operation and determination (see FIG. 12) under the control executed by the source unit 130 are performed alternately or in parallel. Here, it is assumed that the sink device supports the HDCP.

At the first Step S21, it is determined whether the power pin (+5 V power pin) is a high level. If the above-described Step S1 (see FIG. 12) has been performed, a positive determination is made at Step S21, and the process proceeds to Step S23. Conversely, if the above-described Step S1 has not been performed, a negative determination is made at Step S21, and the same determination is repeated.

At Step S23, it is determined whether the EDID is readable. When a positive determination is made at Step S23, the process proceeds to Step S25. Conversely, if a negative determination is made at Step S23, the same determination is repeated.

At Step S25, the HPD is set to a high level.

At the next Step S27, the EDID is transmitted to the source device.

At the next Step S29, it is determined whether a CEC command in a dedicated format is received. When a positive determination is made at Step S29, the process proceeds to Step S31. If the sink device is a dedicated receiving device (the sink device 150), it can receive the CEC command; therefore, a positive determination is made at Step S29. Conversely, when a negative determination is made at Step S29, the process proceeds to Step S30.

At Step S30, it is determined whether a general-use CEC command is received. When a positive determination is made at Step S30, the process proceeds to Step S31. If the above-described Step S14 (see FIG. 12) has been performed, a positive determination is accordingly made at Step S30. Conversely, when a negative determination is made at Step S30, the flow is terminated.

At the next Step S31, the configuration information and the status information of the sink device are transmitted to the source unit 130.

At the next Step S33, an HDCP initial authentication process is performed. This process is the HDCP initial authentication process performed at the above-described Step S 17 (see FIG. 12). Specifically, as described above, the HDCP initial authentication process is performed between the source unit 130 and the sink device 150.

At the next Step S3 5, the image data and the sound data are received from the source unit 130 and are decoded. After Step S35 is performed, the flow is terminated.

Furthermore, if the sink device is a dedicated receiving device (the sink device 150), an image recording/sound recording are performed by the sink device 150 on the decoded image data and sound data. Moreover, if the sink device is a receiving device that does not have an image recording/sound recording function, the decoded image data is transmitted from the sink device to the display device R and is displayed as an image, and the decoded sound data is transmitted to the sound output device Q and is output as a sound.

As can be understood from the above explanation, if the sink device is a dedicated receiving device (the sink device 150) or if the sink device is a receiving device that does not have an image recording/sound recording function, the source unit 130 outputs the image data and the sound data to the sink device. Therefore, if a sink device that has an image recording/sound recording function is not a dedicated receiving device, it is difficult to perform an image recording or sound recording on video contents.

As described above, the teleconference device 100 of the present embodiment is a communication device that is connected to the video-content reproduction device P (an external device that is capable of reproducing video contents) and that is used at a one hub to hold a teleconference (information sharing) by transmitting and receiving image data and sound data among a plurality of (e.g., 10) hubs via a communication network, the communication device includes the source unit (transmitting unit) 130 that converts the sound data from the one hub, the image data and the sound data transmitted from a different hub other than the one hub, and the image data and the sound data transmitted from the video-content reproduction device P into an HDMI (registered trademark) signal (digital signal that conforms to an HDMI (registered trademark) standard) so as to transmit it to the sink device (receiving device) that conforms to the HDMI (registered trademark) standard, and the source unit 130 transmits the HDMI (registered trademark) signal to the sink device when the sink device is a dedicated receiving device (the sink device 150) that is previously specified and that has an image recording/sound recording function or when the sink device is a receiving device that does not have an image recording/sound recording function.

In this case, if the sink device is a dedicated receiving device (the sink device 150) or if the sink device is a receiving device that does not have an image recording/sound recording function, it is possible to perform an image recording/sound recording on the details of a conference including video contents that are copyrighted works, for example, and it is possible to view the video contents without violating the copyrights thereof. Furthermore, it is possible to prevent the video contents from being copied by using a sink device that has an image recording/sound recording function but is not a dedicated receiving device. If a sink device that is not a dedicated receiving device can perform an image recording/sound recording on video contents via the teleconference device 100, there is a possibility that the teleconference device 100 is used mainly as a device for unauthorized copying.

As a result, even if video contents are copyrighted works, it is possible to use the video contents in the teleconference device 100 legally (without violating the copyrights), and it is possible to prevent unauthorized copying of the video contents.

Specifically, even if image data and sound data are copyrighted, the image data and the sound data can be used legally (without violating the copyright), and unauthorized copying of the image data and the sound data can be prevented.

Furthermore, a dedicated receiving device (the sink device 150) includes a dedicated code (unique information) that is recognizable by the source unit 130, the source unit 130 is capable of easily estimating whether the sink device is a dedicated receiving device.

Moreover, if the sink device has a dedicated code, the source unit 130 transmits, to the sink device, a CEC command in a dedicated format that is recognizable exclusively by a dedicated receiving device and, when it receives, from the sink device, the configuration information and the status information of the sink device, it transmits an HDMI (registered trademark) signal to the sink device.

In this case, even if a dedicated code is illegally stored in a sink device that is not a dedicated receiving device, it is difficult for the sink device to recognize the CEC command in a dedicated format; therefore, the configuration information and the status information of the sink device are not transmitted from the sink device to the source unit 130. Thus, image data and sound data are not transmitted from the source unit 130 to the sink device.

The teleconference device 100 further includes the microphone 20 and the HDMI (registered trademark) port 135 for connecting the source unit 130 and the sink device and, when the source unit 130 receives sound data from any one of a different hub, the video-content reproduction device P, and the microphone 20, the source unit 130 is capable of transmitting the sound data to the sink device via the HDMI (registered trademark) port 135 and, when the source unit 130 receives sound data from at least two of a different hub, the video-content reproduction device P, and the microphone 20, the source unit 130 is capable of mixing at least two sets of the sound data and transmitting them to the sink device via the HDMI (registered trademark) port 135.

In this case, as the HDMI (registered trademark) port 135 and the sink device 150 are connected to each other, the details of a conference can be recorded in the sink device 150 so that the recorded details of the conference can be viewed as appropriate. Furthermore, as the HDMI (registered trademark) port 135 and the sink device 250 are connected to each other, the image and sound received from a different hub and the video-content reproduction device P can be viewed via the sink device 250 in real time.

Furthermore, although the single HDMI (registered trademark) port is provided in the teleconference device 100 of the above-described embodiment, multiple HDMI (registered trademark) ports may be provided. In this case, multiple sink devices can be connected to the teleconference device 100 in parallel.

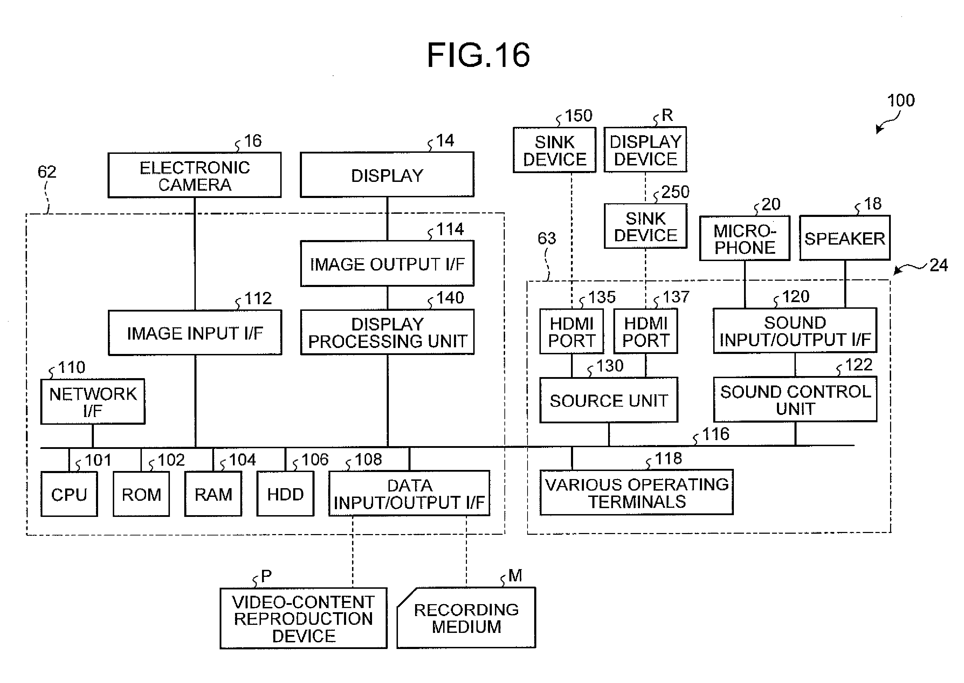

Specifically, as illustrated in FIG. 16, it is possible that, for example, an HDMI (registered trademark) port 137 is provided in addition to the HDMI (registered trademark) port 135, the HDMI (registered trademark) port 137 is connected to, for example, the monitoring sink device 250 illustrated in FIG. 15 via an HDMI (registered trademark) cable, and image data and sound data are transmitted from the source unit 130 to the display device R and the sound output device Q via the sink device 250. In this case, if multiple sets of sound data are separately transmitted from at least one different hub and the video-content reproduction device P, the sink device 250 may perform mixing on the multiple sets of sound data and transmit it to the sound output device Q. Furthermore, the HDMI (registered trademark) port 135 may be used as a port that is dedicated for an image recording/sound recording and that is connected to the sink device 150. In this case, it is preferable to provide a display for easily recognizing that the HDMI (registered trademark) port 137 is a port for monitoring and the HDMI (registered trademark) port 135 is a port dedicated for an image recording/sound recording. As a result, it is possible to view the image and sound received from at least one different hub and the video-content reproduction device P in a high-quality state while recording the details of a conference. Furthermore, if the sound output device Q is not used, sound data may not be transmitted to the HDMI (registered trademark) port 137 for monitoring.

Furthermore, if a plurality of HDMI (registered trademark) ports is provided, it is possible that the function of each of the HDMI (registered trademark) ports is not defined and the type of sink device that is connected to the HDMI (registered trademark) port is detected so that the sound data to be transmitted to the sink device is selected in accordance with the result of the detection. For example, if a sink device used for monitoring is connected to the HDMI (registered trademark) port, the source unit may perform mixing on the sound data received from a different hub and the video-content reproduction device P and transmit it to the HDMI (registered trademark) port. Furthermore, for example, if a sink device used for an image recording/sound recording is connected to the HDMI (registered trademark) port, the source unit may perform mixing on the sound data received from the hub of interest, a different hub, and the video-content reproduction device P and transmit it to the HDMI (registered trademark) port.

Furthermore, although the teleconference device of the above-described embodiment includes the display 14, it does not always include the display 14.

Furthermore, a dedicated receiving device (the sink device 150) may include at least one of a display unit for displaying images and a sound output unit for outputting sounds.

Furthermore, the sink device 250, which is used for monitoring and does not have an image recording/sound recording function, may include at least one of a display unit for displaying images and a sound output unit for outputting sounds. In this case, at least one of the display device R and the sound output device Q is not needed.

Furthermore, in the above-described embodiment, the source unit converts image data and sound data into an HDMI (registered trademark) signal and transmit it to the sink device; however, this is not a limitation. For example, the source unit may convert image data into a Digital Visual Interface (DVI) signal and transmit it to the sink device. At this time, for example, the source unit may convert sound data into Sony Philips Digital Interface (S/PDIF) and transmit it to the sink device.

Furthermore, in the above-described embodiment, the source unit 130 transmits, to the sink device 150, the sound data from the hub of interest (one hub) (the sound data that is input through the microphone 20 of the hub of interest), the image data and the sound data from a different hub, and the image data and the sound data from the video-content reproduction device, or the source unit 130 transmits, to the sink device 250, the image data and the sound data from a different hub and the image data and the sound data from the video-content reproduction device; however, this is not a limitation and, if necessary, the source unit may transmit, to the sink device, at least one selected form a group consisting of the image data (the image data that is input through the electronic camera 16 at the hub of interest) and the sound data from the hub of interest, the image data and the sound data from a different hub, and the image data and the sound data from the video-content reproduction device.

Furthermore, although the teleconference device 100 is connected to the video-content reproduction device P in the above-described embodiment, they may not be connected to each other. In this case, the source unit may transmit, to the sink device, at least one selected form a group consisting of the image data and the sound data from the hub of interest (one hub) and the image data and the sound data from a different hub.

Furthermore, although a teleconference is held among the 10 hubs in the above-described embodiment, this is not a limitation, and it may be held among multiple hubs. In this case, it is preferable that the teleconference device 100 is installed at each of the hubs.

Furthermore, although what is called a liquid crystal display is used as the display in the above-described embodiment, this is not a limitation, and the other displays, such as a plasma display, or organic electroluminescence (EL) display, may be used.

Furthermore, although the electronic camera, the microphone, and the speaker are integrally installed in the chassis according to the above-described embodiment, at least one of them may be installed separately from the chassis.

Furthermore, although the teleconference device 100 is used in one room according to the above-described embodiment, this is not a limitation. As described above, the teleconference device 100 is superior in portability; therefore, the teleconference device 100 does not need to be installed in a specific conference room, and it is expected that the teleconference device 100 can be freely carried around and be used in various places.

Furthermore, although the present invention is applied to what is called the portable-type teleconference device 100 in the above-described embodiment, it may be applied to what is called a stationary teleconference device.

Furthermore, although the number of users at each of the hubs is one in the above-described embodiment, this is not a limitation, and there may be a plurality of users. In this case, for example, the image that displays all of the users at each of the hubs may be transmitted to the other hubs, or the image that displays a part of the users at the hub may be transmitted to the other hubs by operating the view switch button 58.

Furthermore, the program that is used in the teleconference device (also referred to as the communication device) of the above-described embodiment to execute the sequence of operations illustrated in, for example, FIGS. 12 and 13 is provided by being stored, in the form of a file that is installable and executable, in a recording medium readable by a computer, such as a CD-ROM, a flexible disk (FD), a CD-R, or a digital versatile disk (DVD).

Furthermore, a configuration may be such that the program that is used in the teleconference device (also referred to as the communication device) of the above-described embodiment to execute the sequence of operations illustrated in, for example, FIGS. 12 and 13 is stored in a computer connected via a network, such as the Internet, and is provided by being downloaded via the network. Moreover, a configuration may be such that the program for executing the flow that is performed by the teleconference device (also referred to as the communication device) of the above-described embodiment is provided or distributed via a network, such as the Internet.

Moreover, a configuration may be such that the program that is used in the teleconference device (also referred to as the communication device) of the above-described embodiment to execute the sequence of operations illustrated in, for example, FIGS. 12 and 13 is provided such that it is previously installed in a ROM, or the like.

Although an explanation is given, in the above-described embodiment, of a case where the present invention is applied to a dedicated device for teleconference, it may be applied to any device if the device is a personal computer, smartphone, or the like, that has a camera and a sound input function.

Furthermore, although an explanation is given in the above-described embodiment by using, as an example of the communication device, the teleconference device 100 that is used for teleconference, this is not a limitation. Specifically, the communication device according to the present invention can be used in various forms as a communication tool that is used for sharing information by transmitting and receiving images and sounds among a plurality of hubs.

According to an embodiment, even if image data and sound data are copyrighted, it is possible to use the image data and the sound data legally (without violating the copyrights), and it is possible to prevent unauthorized copying of the image data and the sound data.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A communication device (100) that is used at a one hub to share information by transmitting and receiving image data and sound data among a plurality of hubs via a communication network, comprising:
a transmitting unit (130) that converts at least one selected from a group consisting of image data and sound data from the one hub and image data and sound data transmitted from a different hub other than the one hub, into a digital signal that conforms to a predetermined standard so as to transmit the digital signal to a receiving device (150, 250) that supports the predetermined standard, wherein
the transmitting unit (130) transmits the digital signal to the receiving device (150, 250) when the receiving device (150, 250) is a dedicated receiving device (150) that is previously specified and that has an image recording/sound recording function or when the receiving device (150, 250) is a receiving device (250) that does not have an image recording/sound recording function.

2. The communication device (100) according to claim 1, wherein the dedicated receiving device (150) includes unique information that is recognizable by the transmitting unit (130).

3. The communication device (100) according to claim 2, wherein
when the receiving device (150) includes the unique information, the transmitting unit (130) transmits, to the receiving device (150), a command in a dedicated format that is recognizable exclusively by the dedicated receiving device (150) and,
when the transmitting unit (130) receives, from the receiving device (150), configuration information and status information of the receiving device (150), the transmitting unit (130) transmits the digital signal to the receiving device (150).

4. The communication device (100) according to any one of claims 1 to 3, further comprising:
a microphone (20); and
a port (135) to connect the transmitting unit (130) and the receiving device (150),
wherein
when the transmitting unit (130) receives sound data from any one of the different hub, an external device (P, M), and the microphone (20), the transmitting unit (130) is capable of transmitting the sound data to the receiving device (150) via the port (135), and
when the transmitting unit (130) receives sound data from at least two of the different hub, the external device (P, M), and the microphone (20), the transmitting unit (130) is capable of mixing at least two sets of sound data and transmitting the sound data to the receiving device (150) via the port (135).

5. The communication device (100) according to claim 4, further comprising a different port (137) to connect the transmitting unit (130) and the receiving device (250), wherein
when the transmitting unit (130) receives sound data from any one of the different hub, the external device (P, M), and the microphone (20), the transmitting unit (130) is capable of transmitting the sound data to the receiving device (250) that does not have the image recording/sound recording function via the different port (137), and
when the transmitting unit (130) receives sound data from at least two of the different hub, the external device (P, M), and the microphone (20), the transmitting unit (130) is capable of mixing at least two sets of sound data and transmitting the sound data to the dedicated receiving device (250) via the port (137).

6. The communication device (100) according to any one of claims 1 to 5, wherein the predetermined standard is an HDMI (registered trademark) standard.

7. The communication device (100) according to any one of claims 1 to 6, wherein a video content corresponding to the digital data is protected by copyright protection.

8. A communication system (1000) comprising:
the communication device (100) according to any one of claims 1 to 7; and
the dedicated receiving device (150).

9. A method of using a communication device (100), the communication device (100) being used at a one hub to share information by transmitting and receiving image data and sound data among a plurality of hubs via a communication network, the method comprising:
determining whether a receiving device (150, 250) that is connected to the communication device (100) and that supports a predetermined standard is any one of a dedicated receiving device (150) that is previously specified and that has an image recording/sound recording function or a receiving device (250) that does not have an image recording/sound recording function; and
when a determination result is positive at the determining, converting at least one selected form a group consisting of image data and sound data from the one hub and image data and sound data transmitted from a different hub other than the one hub, into a digital signal in accordance with the predetermined standard so as to transmit the digital signal from the communication device (100) to the receiving device (150, 250).

10. A computer program product comprising a non-transitory computer-readable medium having computer readable program codes used in a communication device (100) that is used at a one hub to share information by transmitting and receiving image data and sound data among a plurality of hubs via a communication network, the program codes when executed causing the communication device (100) to execute:
determining whether a receiving device (150, 250) that is connected to the communication device (100) and that supports a predetermined standard is any one of a dedicated receiving device (150) that is previously specified and that has an image recording/sound recording function or a receiving device (250) that does not have an image recording/sound recording function; and
when a determination result is positive at the determining, converting, at least one selected form a group consisting of image data and sound data from the hub and image data and sound data transmitted from a different hub that is different from the hub, into a digital signal in accordance with the predetermined standard so as to transmit the digital signal to the receiving device (150, 250).
